# EUROPÄISCHE PATENTSCHRIFT

(11) **EP 3 332 434 B1**
(45) Veröffentlichungstag und Bekanntmachung des Hinweises auf die Patenterteilung: **22.05.2019**
(21) Anmeldenummer: 16745762.1
(22) Anmeldetag: 03.08.2016
(51) Int. Cl.: H01M 2/02, H01M 10/48

(54) **VERFAHREN ZUR BESTIMMUNG EINES DRUCKS INNERHALB EINES GEHÄUSES EINER BATTERIEZELLE UND BATTERIEZELLE**
METHOD FOR DETERMINING A PRESSURE INSIDE A HOUSING OF A BATTERY CELL, AND BATTERY CELL
PROCÉDÉ DE DÉTERMINATION D'UNE PRESSION AU SEIN D'UN BOÎTIER D'UN ÉLÉMENT DE BATTERIE ET ÉLÉMENT DE BATTERIE

(30) Priorität: 07.08.2015 DE 102015215091
(43) Veröffentlichungstag der Anmeldung: 13.06.2018
(73) Patentinhaber: Robert Bosch GmbH, 70442 Stuttgart (DE)
(72) Erfinder: REINSHAGEN, Holger, 96052 Bamberg (DE); SAUERTEIG, Daniel, 96052 Bamberg (DE); POLLER, Silvan, 02829 Neisseaue Ot Kaltwasser (DE)
(86) Internationale Anmeldenummer: PCT/EP2016/068498
(87) Internationale Veröffentlichungsnummer: WO 2017/025398

(56) Entgegenhaltungen:
- DE-A1-102008 050 536
- DE-B- 1 086 312
- US-A1- 2014 023 888

## Beschreibung

Die Erfindung betrifft ein Verfahren zur Bestimmung eines Drucks innerhalb eines Gehäuses einer Batteriezelle, die eine innerhalb des Gehäuses angeordnete Messelektrode und eine innerhalb des Gehäuses angeordnete Elektrodeneinheit umfasst, und deren Gehäuse mindestens teilweise elektrisch leitfähig ist. Die Erfindung betrifft auch eine Batteriezelle, die ein Gehäuse, das mindestens teilweise elektrisch leitfähig ist, eine innerhalb des Gehäuses angeordnete Messelektrode und eine innerhalb des Gehäuses angeordnete Elektrodeneinheit umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybrid Electric Vehicle, HEV) sowie Plug-In-Hybridfahrzeugen (Plug-In-Hybrid Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Graphit. Aber auch Silizium ist als Aktivmaterial für Anoden verbreitet.

In das Aktivmaterial der Anode sind Lithiumatome eingelagert. Bei einem Entladevorgang fließen Elektronen in einem äußeren Stromkreis von der Anode zur Kathode. Innerhalb der Batteriezelle wandern Lithiumionen bei einem Entladevorgang von der Anode zur Kathode. Dabei lagern die Lithiumionen aus dem Aktivmaterial der Anode reversibel aus, was auch als Delithiierung bezeichnet wird. Bei einem Ladevorgang der Batteriezelle wandern die Lithiumionen von der Kathode zu der Anode. Dabei lagern die Lithiumionen wieder in das Aktivmaterial der Anode reversibel ein, was auch als Lithiierung bezeichnet wird.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die Elektroden können auch zu einem Elektrodenstapel übereinander geschichtet sein oder auf eine andere Art eine Elektrodeneinheit bilden. Eine Batteriezelle umfasst in der Regel eine oder mehrere Elektrodeneinheiten.

Die beiden Elektroden der Elektrodeneinheit werden mittels Kollektoren elektrisch mit Polen der Batteriezelle, welche auch als Terminals bezeichnet werden, verbunden. Die Elektroden und der Separator sind von einem in der Regel flüssigen Elektrolyt umgeben. Der Elektrolyt ist für die Lithiumionen leitfähig und ermöglicht den Transport der Lithiumionen zwischen den beiden Elektroden. Insbesondere ist der Separator mit dem flüssigen Elektrolyt getränkt.

Die Batteriezelle weist ferner ein Zellengehäuse auf, welches beispielsweise aus Aluminium gefertigt ist. Das Zellengehäuse ist in der Regel prismatisch, insbesondere quaderförmig, ausgestaltet und druckfest ausgebildet. Aber auch andere Gehäuseformen, beispielsweise kreiszylindrisch, oder auch flexible Pouchzellen, sind bekannt.

Für einen sicheren Betrieb einer Batteriezelle ist es notwendig, aktuelle Parameter der Batteriezelle zu überwachen. Hierzu gehören unter anderem eine an den Terminals anliegende Spannung, ein durch die Batterie fließender Strom, sowie eine Temperatur außerhalb des Gehäuses. Zur Ermittlung weiterer Parameter, insbesondere eines Drucks innerhalb des Gehäuses sowie einer Temperatur innerhalb des Gehäuses, ist es bekannt, entsprechende Sensoren innerhalb des Gehäuses der Batteriezelle vorzusehen.

Aus der US 2002/0155327 A1 ist eine Batteriezelle mit einer Kathode und mehreren Anodenbereichen bekannt. Zwischen der Kathode und den Anodenbereichen ist dabei ein Elektrolyt vorhanden. Zusätzlich sind Sensoren, beispielsweise Drucksensoren, vorgesehen.

Die US 2014/0004389 A1 offenbart eine Batteriezelle mit einer Elektrodeneinheit und mehreren Sensoren. Die Sensoren dienen unter anderem zur Messung einer Temperatur der Batteriezelle.

In der US 2013/0004811 A1 ist eine Batteriezelle mit einem Temperatursensor bekannt. Der Temperatursensor kann dabei in eine Anode, in eine Kathode oder in einen Separator integriert sein.

Die US 2006/0246345 A1 beschreibt ein Batteriemodul, welches durch Piezosensoren zwischen einzelnen Batteriezellen mechanische Drücke überwacht.

Die DE 10 2007 063 188 A1 offenbart eine Batteriezelle mit einem externen Drucksensor, wobei der Drucksensor den Batteriezustand über eine Verformung der Batteriezelle erfasst. Der Drucksensor ist dabei von außen in das Gehäuse der Batteriezelle integriert.

Aus der DE 10 2012 209 397 A1 ist eine Batteriezelle mit innen liegendem Drucksensor bekannt, der als Folie ausgeführt ist und zwischen dem Elektrodenwickel und dem Gehäuse angeordnet ist. Der Sensor besitzt resistive, kapazitive, piezoresistive sowie piezoelektrische Funktionselemente. Ein Elektrodenanschluss kann dabei als Signalleitung fungieren.

Die DE 1086312 offenbart einen alkalischen Akkumulator, in dem zwischen dem Elektrodenpaket und dem Gehäuse ein elektrischer Druckmesser angeordnet ist und ein von diesem beeinflusstes Druckanzeigegerät vorgesehen sein kann.

### Offenbarung der Erfindung

Es wird ein Verfahren zur Bestimmung eines Drucks innerhalb eines Gehäuses einer Batteriezelle vorgeschlagen. Die Batteriezelle umfasst dabei eine innerhalb des Gehäuses angeordnete Messelektrode und eine innerhalb des Gehäuses angeordnete Elektrodeneinheit, die eine Kathode, eine Anode und einen mit einem Elektrolyt getränkten Separator aufweist. Das Gehäuse ist mindestens teilweise elektrisch leitfähig ausgeführt. Das Gehäuse ist dabei potentialfrei, also elektrisch weder mit der Anode noch mit der Kathode verbunden.

Erfindungsgemäß wird eine elektrische Impedanz zwischen der Messelektrode und dem Gehäuse gemessen. Insbesondere werden dabei ein ohmscher Widerstand sowie eine Kapazität zwischen der Messelektrode und dem Gehäuse gemessen. Eine Induktivität ist dabei von untergeordneter Bedeutung. Aus der gemessenen elektrischen Impedanz, insbesondere aus dem gemessenen ohmschen Widerstand sowie aus der gemessenen Kapazität, wird dann der Druck innerhalb des Gehäuses ermittelt. Es existiert dabei ein Zusammenhang zwischen der gemessenen elektrischen Impedanz, insbesondere der gemessenen Kapazität, beziehungsweise dem gemessenen Widerstand, und dem Druck innerhalb des Gehäuses. Dieser Zusammenhang ist in der Regel nicht linear.

Gemäß der Erfindung werden die elektrische Impedanz, also der ohmsche Widerstand sowie die Kapazität, des mit dem Elektrolyt getränkten Separators der Elektrodeneinheit der Batteriezelle gemessen. Der Elektrolyt weist eine ionische Leitfähigkeit auf. Ferner wirkt der Elektrolyt wie ein Dielektrikum und weist eine relative Permittivität auf. Bei einer Druckbelastung auf den Separator erfolgt eine Verformung von Poren des Separators, in denen der Elektrolyt enthalten ist. Dadurch ändert sich die ionische Leitfähigkeit des mit dem Elektrolyt getränkten Separators. Ferner
ändert sich dadurch die relative Permittivität des mit dem Elektrolyt getränkten Separators.

Eine Änderung der ionischen Leitfähigkeit des mit dem Elektrolyt getränkten Separators ist durch eine Änderung des gemessenen ohmschen Widerstandes erkennbar. Eine Änderung der relativen Permittivität des mit dem Elektrolyt getränkten Separators ist durch eine Änderung der gemessenen Kapazität erkennbar. Nach einer Messung der elektrischen Impedanz, also des ohmschen Widerstandes sowie der Kapazität, des mit dem Elektrolyt getränkten Separators zwischen der Messelektrode und dem Gehäuse wird dann der Druck innerhalb des Gehäuses der Batteriezelle aufgrund des bekannten Zusammenhangs zwischen der gemessenen elektrischen Impedanz und dem Druck innerhalb des Gehäuses ermittelt.

Gemäß einer weiteren Ausgestaltung wird die elektrische Impedanz, insbesondere die Kapazität, einer an dem Gehäuse anliegenden Isolationsschicht der Batteriezelle gemessen. Die Isolationsschicht wirkt wie ein Dielektrikum und weist eine relative Permittivität auf. Bei einer Druckbelastung auf die Isolationsschicht erfolgt eine Verformung der Isolationsschicht. Dadurch ändert sich die relative Permittivität der Isolationsschicht.

Eine Änderung der relativen Permittivität der Isolationsschicht ist durch eine Änderung der gemessenen Impedanz, insbesondere der gemessenen Kapazität erkennbar. Nach einer Messung der Impedanz, insbesondere der Kapazität, der Isolationsschicht zwischen der Messelektrode und dem Gehäuse wird dann der Druck innerhalb des Gehäuses aufgrund des bekannten Zusammenhangs zwischen der gemessenen Impedanz und dem Druck innerhalb des Gehäuses ermittelt.

Gemäß einer vorteilhaften Weiterbildung der Erfindung ist die Messelektrode die Anode oder die Kathode der Elektrodeneinheit der Batteriezelle. Insbesondre dient dabei eine außen gelegene Lage der Anode oder der Kathode als Messelektrode. In diesem Fall ist keine zusätzliche Elektrode innerhalb des Gehäuses erforderlich, und dadurch ist keine zusätzliche Gehäusedurchführung erforderlich.

Gemäß einer anderen vorteilhaften Weiterbildung der Erfindung ist die Messelektrode eine zusätzliche Gegenelektrode. In diesem Fall sind die Lage sowie die Größe der Messelektrode genau bestimmbar.

Zur Messung der elektrischen Impedanz, insbesondere des ohmschen Widerstandes sowie der Kapazität, wird vorzugsweise eine alternierende Spannung zwischen der Messelektrode und dem Gehäuse angelegt. Bei der alternierenden Spannung kann es sich beispielsweise um eine Rechteckspannung, eine Dreieckspannung oder um eine harmonische Wechselspannung handeln. Bei Anlegen einer Gleichspannung über einen längeren Zeitraum könnte eine Polarisation des Elektrolyten eintreten, wodurch eine Messung des ohmschen Widerstandes nicht fehlerfrei möglich wäre.

Vorteilhaft wird aus der elektrischen Impedanz, insbesondere aus dem ohmschen Widerstand sowie aus der Kapazität, zusätzlich eine Temperatur innerhalb des Gehäuses ermittelt. Es existiert auch ein Zusammenhang zwischen der gemessenen elektrischen Impedanz, insbesondere der gemessenen Kapazität, beziehungsweise dem gemessenen Widerstand, und der Temperatur innerhalb des Gehäuses. Auch dieser Zusammenhang ist in der Regel nicht linear.

Der Zusammenhang zwischen der gemessenen elektrischen Impedanz, insbesondere der gemessenen Kapazität sowie dem gemessenen Widerstand, und dem Druck innerhalb des Gehäuses ist von der Frequenz der angelegten Spannung abhängig. Auch der Zusammenhang zwischen der gemessenen elektrischen Impedanz, insbesondere der gemessenen Kapazität sowie dem gemessenen Widerstand, und der Temperatur innerhalb des Gehäuses ist von der Frequenz der angelegten Spannung abhängig. Besagte Zusammenhänge unterscheiden sich jedoch.

Vorteilhaft werden somit die elektrischen Impedanzen, insbesondere die ohmschen Widerstände sowie die Kapazitäten, zwischen der Messelektrode und dem Gehäuse bei mehreren Frequenzen gemessen. Aus den gemessenen elektrischen Impedanzen werden dann der Druck und die Temperatur innerhalb des Gehäuses ermittelt. Insbesondere kann aus den gemessenen elektrischen Impedanzen eine Impedanzortskurve aufgenommen werden, und aus der aufgenommen Impedanzortskurve können dann der Druck und die Temperatur innerhalb des Gehäuses ermittelt werden.

Es wird auch eine Batteriezelle vorgeschlagen, welche ein Gehäuse, das mindestens teilweise elektrisch leitfähig ist, eine innerhalb des Gehäuses angeordnete Messelektrode und eine innerhalb des Gehäuses angeordnete Elektrodeneinheit, die eine Kathode, eine Anode und einen mit einem Elektrolyt getränkten Separator aufweist, umfasst. Das Gehäuse ist dabei potentialfrei, also elektrisch weder mit der Anode noch mit der Kathode verbunden.

Bei der erfindungsgemäßen Batteriezelle ist der Separator derart zwischen dem Gehäuse und der Messelektrode angeordnet, dass eine elektrische Impedanz, insbesondere ein ohmscher Widerstand sowie eine Kapazität, zwischen der Messelektrode und dem Gehäuse messbar ist.

Vorteilhaft ist eine an dem Gehäuse anliegende Isolationsschicht vorgesehen, welche mindestens einen Ausschnitt aufweist, wobei der Separator an der Isolationsschicht anliegt und im Bereich des Ausschnitts an dem Gehäuse anliegt.

Es wird auch eine Batteriezelle vorgeschlagen, bei welcher erfindungsgemäß eine an dem Gehäuse anliegende Isolationsschicht vorgesehen ist, wobei die Isolationsschicht derart zwischen dem Gehäuse und der Messelektrode angeordnet ist, dass eine elektrische Impedanz, insbesondere eine Kapazität, zwischen der Messelektrode und dem Gehäuse messbar ist.

Gemäß einer vorteilhaften Ausgestaltung der Erfindung ist die Messelektrode die Anode oder die Kathode der Batteriezelle.

Gemäß einer vorteilhaften Ausgestaltung der Erfindung ist die Messelektrode die eine zusätzliche Gegenelektrode.

Gemäß einer vorteilhaften Weiterbildung der Erfindung weist die Gegenelektrode mehrere voneinander isolierte Messflächen aufweist. Eine derart ausgestaltete Gegenelektrode gestattet eine ortsaufgelöste Messung der Impedanz. Somit können der Druck sowie die Temperatur an verschiedenen Stellen innerhalb des Gehäuses bestimmt werden.

Ein erfindungsgemäßes Verfahren sowie eine erfindungsgemäße Batteriezelle finden vorteilhaft Verwendung in einem Elektrofahrzeug (EV), in einem Hybridfahrzeug (HEV), in einem Plug-In-Hybridfahrzeug (PHEV), oder in einem Consumer-Elektronik-Produkt. Unter Consumer-Elektronik-Produkten sind insbesondere Mobiltelefone, Tablet-PCs oder Notebooks zu verstehen.

### Vorteile der Erfindung

Bei Anwendung des erfindungsgemäßen Verfahrens sind zusätzliche Sensorelemente, insbesondere Drucksensoren sowie Temperatursensoren, nicht erforderlich. Das erfindungsgemäße Verfahren ist auf Batteriezellen mit prismatischem Gehäuse, auf Batteriezellen mit kreiszylindrischem Gehäuse sowie auf Pouchzellen anwendbar.

Bei Verwendung der Anode oder der Kathode als Messelektrode ist ferner keine separate Gehäusedurchführung für die Messelektrode erforderlich. Bei Verwendung einer Gegenelektrode, welche mehrere voneinander isolierte Messflächen aufweist, ist eine ortsaufgelöste Messung der Impedanz möglich. Somit können der Druck sowie die Temperatur an verschiedenen Stellen innerhalb des Gehäuses bestimmt werden. Dadurch ist insbesondere eine frühzeitige Detektion von Fehlstellen, wie beispielsweise von Kurzschlüssen, die zu lokalen Erwärmungen führen, ermöglicht.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batteriezelle gemäß einer ersten Ausführungsform,
- Figur 2: eine schematische Darstellung einer Batteriezelle gemäß einer zweiten Ausführungsform,
- Figur 3: eine schematische Darstellung einer Batteriezelle gemäß einer dritten Ausführungsform und
- Figur 4: eine schematische Darstellung einer Gegenelektrode.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

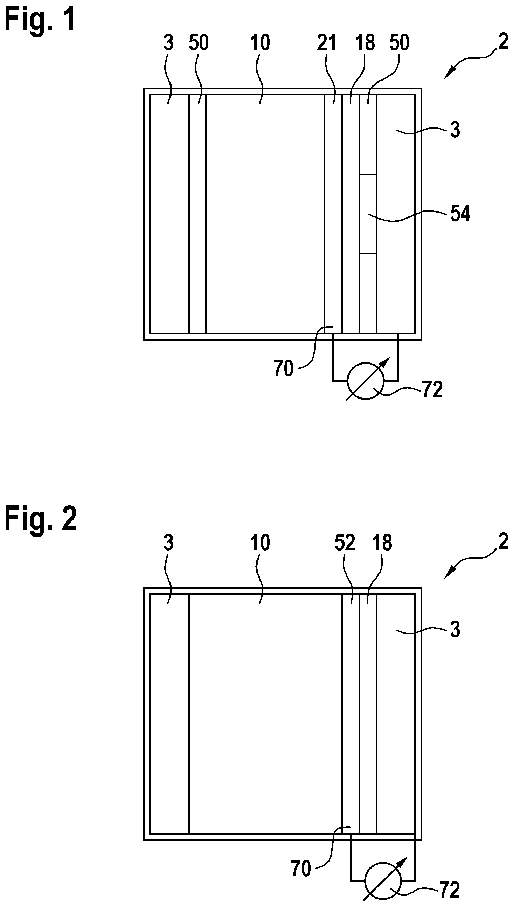

Figur 1 zeigt eine schematische Darstellung einer Batteriezelle 2 gemäß einer ersten Ausführungsform. Die Batteriezelle 2 umfasst ein Gehäuse 3, welches prismatisch, vorliegend quaderförmig, ausgebildet ist. Das Gehäuse 3 ist vorliegend elektrisch leitend ausgeführt und beispielsweise aus Aluminium gefertigt.

Die Batteriezelle 2 umfasst ein negatives Terminal und ein positives Terminal 12. Über die Terminals kann eine von der Batteriezelle 2 zur Verfügung gestellte Spannung abgegriffen werden. Ferner kann die Batteriezelle 2 über die Terminals auch geladen werden.

Innerhalb des Gehäuses 3 der Batteriezelle 2 ist eine Elektrodeneinheit 10 angeordnet, welche vorliegend als Elektrodenwickel ausgeführt ist. Die Elektrodeneinheit 10 weist zwei Elektroden, nämlich eine Anode 21 und eine hier nicht sichtbare Kathode, auf. Die Anode 21 und die Kathode sind jeweils folienartig ausgeführt und unter Zwischenlage eines Separators 18 zu dem Elektrodenwickel gewickelt. Anstatt als ein Elektrodenwickel kann die Elektrodeneinheit 10 auch beispielsweise als ein Elektrodenstapel ausgeführt sein.

Die Anode 21 umfasst ein anodisches Aktivmaterial, welches folienartig ausgeführt ist. Die Anode 21 umfasst ferner einen anodischen Stromableiter, welcher ebenfalls folienartig ausgebildet ist. Das anodische Aktivmaterial und der anodische Stromableiter sind flächig aneinander gelegt und miteinander verbunden. Der anodische Stromableiter ist elektrisch leitfähig ausgeführt und aus einem Metall gefertigt, beispielsweise aus Kupfer. Der anodische Stromableiter ist mittels eines Kollektors elektrisch mit dem negativen Terminal der Batteriezelle 2 verbunden.

Die Kathode umfasst ein kathodisches Aktivmaterial, welches folienartig ausgeführt ist. Die Kathode umfasst ferner einen kathodischen Stromableiter, welcher ebenfalls folienartig ausgebildet ist. Das kathodische Aktivmaterial und der kathodische Stromableiter sind flächig aneinander gelegt und miteinander verbunden. Der kathodische Stromableiter ist elektrisch leitfähig ausgeführt und aus einem Metall gefertigt, beispielsweise aus Aluminium. Der kathodische Stromableiter ist mittels eines Kollektors elektrisch mit dem positiven Terminal der Batteriezelle 2 verbunden.

Die Anode 21 und die Kathode sind durch den Separator 18 voneinander getrennt. Der Separator 18 ist ebenfalls folienartig ausgebildet. Der Separator 18 ist ionisch leitfähig, also für Lithiumionen durchlässig. Das Gehäuse 3 der Batteriezelle 2 ist mit einem flüssigen Elektrolyt gefüllt, welcher ionisch leitfähig ausgebildet ist. Insbesondere ist der Separator 18 mit dem flüssigen Elektrolyt getränkt.

In der gezeigten Darstellung sind die äußere Lage der Anode 21 sowie die äußere Lage des Separators 18 dargestellt. Auf der Innenseite des Gehäuses 3 ist eine Isolationsschicht 50 angeordnet. Der Separator 18 liegt dabei an der Isolationsschicht 50 an.

Die Isolationsschicht 50 umfasst einen oder mehrere Ausschnitte 54. Vorliegend ist einer der Ausschnitte 54 dargestellt. Bei einer Druckerhöhung im Inneren der Elektrodeneinheit 10 wird der Separator 18 in den Ausschnitt 54 gedrückt und berührt dabei das Gehäuse 3.

Die Anode 21 wirkt vorliegend als Messelektrode 70. Alternativ kann auch die Kathode als Messelektrode wirken. Ein Messgerät 72 ist zwischen der Messelektrode 70 und dem Gehäuse 3 elektrisch angeschlossen. Mittels des Messgeräts 72 kann eine Impedanz zwischen der Messelektrode 70, also der Anode 21, und dem Gehäuse 3 gemessen werden. Vorliegend wird die Impedanz des Separators 18 mit Hilfe des Messgeräts 72 gemessen.

Nach einer Messung der elektrischen Impedanz, also des ohmschen Widerstandes sowie der Kapazität, des mit dem Elektrolyt getränkten Separators 18 wird dann der Druck innerhalb des Gehäuses 3 aufgrund eines bekannten Zusammenhangs zwischen der gemessenen elektrischen Impedanz und dem Druck innerhalb des Gehäuses 3 ermittelt.

Figur 2 zeigt eine schematische Darstellung einer Batteriezelle 2 gemäß einer erfindungsgemässen Ausführungsform. Die Batteriezelle 2 gemäß der zweiten Ausführungsform ähnelt der in Figur 1 gezeigten Batteriezelle 2 gemäß der ersten Ausführungsform. Im Folgenden wird daher vor allem auf die Unterschiede eingegangen.

Die Anode 21 ist in der hier gezeigten Darstellung nicht sichtbar. Die Batteriezelle 2 gemäß der zweiten Ausführungsform umfasst eine Gegenelektrode 52, welche in der Elektrodeneinheit 10 angeordnet ist. Die Gegenelektrode 52 ist dabei von der äußeren Lage des Separators 18 bedeckt.

Der Separator 18 liegt an der Innenfläche des Gehäuses 3 an. Die Gegenelektrode 52 wirkt als Messelektrode 70. Vorliegend ist das Messgerät 72 zwischen der Messelektrode 70, also der Gegenelektrode 52, und dem Gehäuse 3 elektrisch angeschlossen. Mittels des Messgeräts 72 erfolgt eine Messung der Impedanz des Separators 18.

Nach einer Messung der elektrischen Impedanz, also des ohmschen Widerstandes sowie der Kapazität, des mit dem Elektrolyt getränkten Separators 18 wird dann der Druck innerhalb des Gehäuses 3 aufgrund eines bekannten Zusammenhangs zwischen der gemessenen elektrischen Impedanz und dem Druck innerhalb des Gehäuses 3 ermittelt.

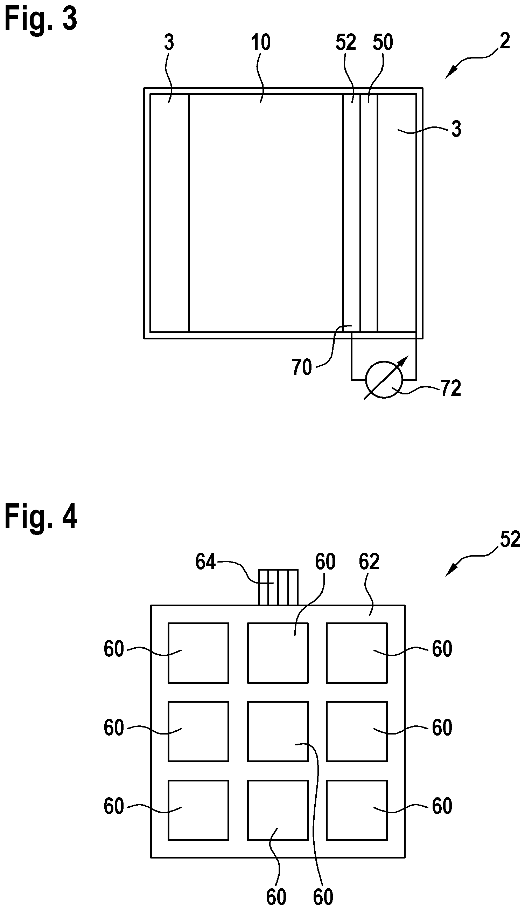

Figur 3 zeigt eine schematische Darstellung einer Batteriezelle 2 gemäß einer dritten Ausführungsform. Die Batteriezelle 2 gemäß der dritten Ausführungsform ähnelt dabei der Batteriezelle 2 gemäß der ersten Ausführungsform, die in Figur 1 dargestellt ist. Es wird im Folgenden daher insbesondere auf die Unterschiede eingegangen.

Die Batteriezelle 2 gemäß der dritten Ausführungsform umfasst eine Gegenelektrode 52. Die Gegenelektrode 52 liegt dabei außerhalb der Elektrodeneinheit 10. Die Anode 21 sowie der Separator 18 sind in der hier gezeigten Darstellung nicht sichtbar. Zwischen der Gegenelektrode 52 und dem Gehäuse 3 ist eine Isolationsschicht 50 vorgesehen.

Die Gegenelektrode 52 kann auch mit der Isolationsschicht 50 beschichtet sein. Die Gegenelektrode 52 wirkt als Messelektrode 70. Alternativ kann auch die Anode 21 oder die Kathode als Messelektrode 70 wirken. Ein Messgerät 72 ist zwischen der Messelektrode 70, also der Gegenelektrode 52, und dem Gehäuse 3 elektrisch angeschlossen. Mittels des Messgeräts 72 kann eine Impedanz der Isolationsschicht 50 gemessen werden.

Die besagte Isolationsschicht 50 ist elektrisch isolierend ausgebildet, also elektrisch nicht leitfähig. Von daher entspricht die gemessene Impedanz der Isolationsschicht 50 annähernd der Kapazität, die sich durch die Isolationsschicht 50 zwischen dem Gehäuse 3 und der Messelektrode 70 ausbildet. Ein elektrischer Widerstand ist nicht messbar.

Nach einer Messung der elektrischen Impedanz, also der Kapazität, der Isolationsschicht 50 wird dann der Druck innerhalb des Gehäuses 3 aufgrund eines bekannten Zusammenhangs zwischen der gemessenen elektrischen Impedanz und dem Druck innerhalb des Gehäuses 3 ermittelt.

Figur 4 zeigt eine schematische Darstellung einer Gegenelektrode 52. Die Gegenelektrode 52 umfasst eine Kunststofffolie 62, auf welcher mehrere Messflächen 60 aufgebracht sind. Bei den Messflächen 60 handelt es sich vorliegend um Metallschichten, welche auf die Kunststofffolie 62 beispielsweise aufgedampft sind.

Die Messflächen 60 sind dabei regelmäßig in Form einer Matrix angeordnet. Die einzelnen Messflächen 60 der Gegenelektrode 52 befinden sich also in mehreren Reihen sowie mehreren Spalten nebeneinander auf der Kunststofffolie 62. Aber auch andere Anordnungen der Messflächen 60 auf der Kunststofffolie 62 sind denkbar.

Jede der Messflächen 60 der Gegenelektrode 52 ist über einen nicht dargestellten Leiter mit einem Kontaktelement 64 verbunden. Das Kontaktelement 64 umfasst mehrere metallische Adern, mit denen die einzelnen Messflächen 60 kontaktiert sind.

Von dem Kontaktelement 64 erstrecken sich mehrere hier nicht dargestellte Leiter durch eine entsprechende Durchführung in dem Gehäuse 3 der Batteriezelle 2 hindurch aus dem Gehäuse 3 heraus. Mittels der hier gezeigten Gegenelektrode 52 ist es möglich, an mehreren verschiedenen, nahe beieinander liegenden Orten innerhalb des Gehäuses 3 der Batteriezelle 2 jeweils eine Impedanz zu messen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Bestimmung eines Drucks innerhalb eines Gehäuses (3)
einer Batteriezelle (2), welche
eine innerhalb des Gehäuses (3) angeordnete Messelektrode (70) und
eine innerhalb des Gehäuses (3) angeordnete Elektrodeneinheit (10),
die eine Kathode, eine Anode (21) und einen mit einem Elektrolyt getränkten Separator (18) aufweist,
umfasst, wobei das Gehäuse (3) mindestens teilweise elektrisch leitfähig ist,
wobei
eine elektrische Impedanz zwischen der Messelektrode (70) und dem Gehäuse (3) gemessen wird, und
aus der elektrischen Impedanz der Druck innerhalb des Gehäuses (3) ermittelt wird, **dadurch gekennzeichnet, dass**
die elektrische Impedanz des mit dem Elektrolyt getränkten Separators (18) der Elektrodeneinheit (10) gemessen wird.

2. Verfahren nach einem der vorstehenden Ansprüche, **dadurch gekennzeichnet, dass**
die Messelektrode (70) die Anode (21) oder die Kathode der Elektrodeneinheit (10) ist.

3. Verfahren nach Anspruch 1, **dadurch gekennzeichnet, dass**
die Messelektrode (70) eine zusätzliche Gegenelektrode (52) ist.

4. Verfahren nacheinem der vorstehenden Ansprüche, **dadurch gekennzeichnet, dass**
zur Messung der elektrischen Impedanz eine alternierende Spannung zwischen der Messelektrode (70) und dem Gehäuse (3) angelegt wird.

5. Verfahren nach einem der vorstehenden Ansprüche, **dadurch gekennzeichnet, dass**
aus der elektrischen Impedanz zusätzlich eine Temperatur innerhalb des Gehäuses (3) ermittelt wird.

6. Batteriezelle (2), umfassend
ein Gehäuse (3), das mindestens teilweise elektrisch leitfähig ist,
eine innerhalb des Gehäuses (3) angeordnete Messelektrode (70) und
eine innerhalb des Gehäuses (3) angeordnete Elektrodeneinheit (10), die eine Kathode, eine Anode (21) und einen mit einem Elektrolyt getränkten Separator (18) aufweist,
**dadurch gekennzeichnet, dass**
der Separator (18) derart zwischen dem Gehäuse (3) und der Messelektrode (70) angeordnet ist, dass
eine elektrische Impedanz zwischen der Messelektrode (70) und dem Gehäuse (3) messbar ist.

7. Batteriezelle (2) nach Anspruch 6, **dadurch gekennzeichnet, dass**
eine an dem Gehäuse (3) anliegenden Isolationsschicht (50) vorgesehen ist, welche mindestens einen Ausschnitt (54) aufweist,
wobei der Separator (18) an der Isolationsschicht (50) anliegt und im Bereich des Ausschnitts (54) an dem Gehäuse (3) anliegt.

8. Batteriezelle (2) nach dem Oberbegriff des Anspruchs 6, **dadurch gekennzeichnet, dass**
eine an dem Gehäuse (3) anliegende Isolationsschicht (50) vorgesehen ist, und dass
die Isolationsschicht (50) derart zwischen dem Gehäuse (3) und der Messelektrode (70) angeordnet ist, dass
eine elektrische Impedanz zwischen der Messelektrode (70) und dem Gehäuse (3) messbar ist.

9. Batteriezelle (2) nach einem der Ansprüche 6 bis 8, **dadurch gekennzeichnet, dass** die Messelektrode (70) die Anode (21) oder die Kathode der Batteriezelle (2) ist.

10. Batteriezelle (2) nach einem der Ansprüche 6 bis 8, **dadurch gekennzeichnet, dass** die Messelektrode (70) eine zusätzliche Gegenelektrode (52) ist.

11. Batteriezelle (2) nach Anspruch 10, **dadurch gekennzeichnet, dass**
die Gegenelektrode (52) mehrere voneinander isolierte Messflächen (60) aufweist.

12. Verwendung eines Verfahrens nach einem der Ansprüche 1 bis 5 oder einer Batteriezelle (2) nach einem der Ansprüche 6 bis 11 in einem Elektrofahrzeug (EV), in einem Hybridfahrzeug (HEV), in einem Plug-In-Hybridfahrzeug (PHEV) oder in einem Consumer-Elektronik-Produkt.

## Claims

1. Method for determining a pressure inside a housing (3) of a battery cell (2), which comprises
a measurement electrode (70) arranged inside the housing (3) and
an electrode unit (10) arranged inside the housing (3), said electrode unit having a cathode, an anode (21) and a separator (18) impregnated with an electrolyte, wherein the housing (3) is at least partly electrically conductive,
wherein
an electrical impedance between the measurement electrode (70) and the housing (3) is measured, and
the pressure inside the housing (3) is determined from the electrical impedance, **characterized in that** the electrical impedance of the separator (18) of the electrode unit (10), said separator being impregnated with the electrolyte, is measured.

2. Method according to one of the preceding claims, **characterized in that**
the measurement electrode (70) is the anode (21) or the cathode of the electrode unit (10).

3. Method according to Claim 1, **characterized in that** the measurement electrode (70) is an additional counterelectrode (52).

4. Method according to one of the preceding claims, **characterized in that**
an alternating voltage is applied between the measurement electrode (70) and the housing (3) in order to measure the electrical impedance.

5. Method according to one of the preceding claims, **characterized in that**
a temperature inside the housing (3) is additionally determined from the electrical impedance.

6. Battery cell (2), comprising
a housing (3), which is at least partly electrically conductive,
a measurement electrode (70) arranged inside the housing (3) and
an electrode unit (10) arranged inside the housing (3), said electrode unit having a cathode, an anode (21) and a separator (18) impregnated with an electrolyte,
**characterized in that**
the separator (18) is arranged between the housing (3) and the measurement electrode (70) in such a way that an electrical impedance between the measurement electrode (70) and the housing (3) can be measured.

7. Battery cell (2) according to Claim 6, **characterized in that**
an insulation layer (50) bearing against the housing (3) is provided, said insulation layer having at least one cutout (54),
wherein the separator (18) bears against the insulation layer (50) and bears against the housing (3) in the region of the cutout (54).

8. Battery cell (2) according to the preamble of Claim 6, **characterized in that** an insulation layer (50) bearing against the housing (3) is provided, and **in that**
the insulation layer (50) is arranged between the housing (3) and the measurement electrode (70) in such a way that
an electrical impedance between the measurement electrode (70) and the housing (3) can be measured.

9. Battery cell (2) according to one of Claims 6 to 8, **characterized in that**
the measurement electrode (70) is the anode (21) or the cathode of the battery cell (2).

10. Battery cell (2) according to one of Claims 6 to 8, **characterized in that**
the measurement electrode (70) is an additional counterelectrode (52).

11. Battery cell (2) according to Claim 10, **characterized in that**
the counterelectrode (52) has a plurality of measurement areas (60) insulated from one another.

12. Use of a method according to one of Claims 1 to 5 or of a battery cell (2) according to one of Claims 6 to 11 in an electric vehicle (EV), in a hybrid vehicle (HEV), in a plug-in hybrid vehicle (PHEV) or in a consumer electronics product.

## Revendications

1. Procédé de détermination d'une pression à l'intérieur d'un boîtier (3) d'un élément de batterie (2), qui comprend
une électrode de mesure (70) disposée à l'intérieur du boîtier (3) et
une unité d'électrodes (10) disposée à l'intérieur du boîtier (3), qui comporte une cathode, une anode (21) et un séparateur (18) imprégné d'un électrolyte,
dans lequel le boîtier (3) est au moins partiellement électriquement conducteur,
dans lequel une impédance électrique est mesurée entre l'électrode de mesure (70) et le boîtier (3), et
la pression à l'intérieur du boîtier (3) est déterminée à partir de l'impédance électrique,
**caractérisé en ce que** l'impédance électrique du séparateur imprégné de l'électrolyte (18) de l'unité d'électrodes (10) est mesurée.

2. Procédé selon l'une quelconque des revendications précédentes, **caractérisé en ce que** l'électrode de mesure (70) est l'anode (21) ou la cathode de l'unité d'électrodes (10).

3. Procédé selon la revendication 1, **caractérisé en ce que** l'électrode de mesure (70) est une contre-électrode supplémentaire (52).

4. Procédé selon l'une quelconque des revendications précédentes,
**caractérisé en ce qu'**une tension alternative est appliquée entre l'électrode de mesure (70) et le boîtier (3) pour mesurer l'impédance électrique.

5. Procédé selon l'une quelconque des revendications précédentes,
**caractérisé en ce qu'**une température à l'intérieur du boîtier (3) est en outre déterminée à partir de l'impédance électrique.

6. Élément de batterie (2) comprenant
un boîtier (3), qui est au moins partiellement électriquement conducteur,
une électrode de mesure (70) disposée à l'intérieur du boîtier (3) et
une unité d'électrodes (10) disposée à l'intérieur du boîtier (3), qui comporte une cathode, une anode (21) et un séparateur (18) imprégné d'un électrolyte, **caractérisé en ce que**
le séparateur (18) est disposé entre le boîtier (3) et l'électrode de mesure (70) de manière à pouvoir mesurer une impédance électrique entre l'électrode de mesure (70) et le boîtier (3).

7. Élément de batterie (2) selon la revendication 6, **caractérisé en ce qu'**il est prévu une couche isolante (50) qui est appliquée sur le boîtier (3) et qui présente au moins une découpe (54),
dans lequel le séparateur (18) est appliqué contre la couche isolante (50) et est appliqué contre le boîtier (3) dans la zone de la découpe (54).

8. Élément de batterie (2) selon le concept générique de la revendication 6,
**caractérisé en ce qu'**il est prévu une couche isolante (50) qui est appliquée sur le boîtier (3), et **en ce que** la couche isolante (50) est disposée entre le boîtier (3) et l'électrode (70)
de manière à pouvoir mesurer une impédance électrique entre l'électrode de mesure (70) et le boîtier (3).

9. Élément de batterie (2) selon l'une quelconque des revendications 6 à 8, **caractérisé en ce que** l'électrode de mesure (70) est l'anode (21) ou la cathode de l'élément de batterie (2).

10. Élément de batterie (2) selon l'une quelconque des revendications 6 à 8, **caractérisé en ce que** l'électrode de mesure (70) est une contre-électrode supplémentaire (52) .

11. Élément de batterie (2) selon la revendication 10, **caractérisé en ce que** la contre-électrode (52) présente plusieurs surfaces de mesure (60) qui sont isolées les unes des autres.

12. Utilisation d'un procédé selon l'une quelconque des revendications 1 à 5 ou d'un élément de batterie (2) selon l'une quelconque des revendications 6 à 11 dans un véhicule électrique (EV), dans un véhicule hybride (HEV), dans un véhicule hybride rechargeable (PHEV) ou dans un produit électronique grand public.
